# EUROPEAN PATENT APPLICATION

(11) **EP 2 921 402 A1**
(43) Date of publication of application: **23.09.2015**
(21) Application number: 15152676.1
(22) Date of filing: 27.01.2015
(51) Int. Cl.: B64C 11/26

(54) **Propeller blade having compliant spar core**

(30) Priority: 21.03.2014 US 201414221739
(71) Applicant: Hamilton Sundstrand Corporation, Windsor Locks, CT 06096-1010 (US)
(72) Inventor: Nagle, David P., Westfield, MA Massachusetts 01085 (US); Smith, Stephen L., West Suffield, CT Connecticut 06093 (US)
(74) Representative: Leckey, David Herbert

(57) **Abstract**

A propeller blade (200) includes a foam core (204) formed of a combination of polyuria and polyvinyl chloride (pvc), an adhesive layer (205) formed on the core (204) and a structural layer (206) that covers at least a portion of the adhesive layer (205) and that surrounds at least a portion of the foam core (204).

## Description

### BACKGROUND OF THE INVENTION

The present invention relates to propellers and, in particular, to propeller blades formed having a foam spar core.

Modem propeller blades typically include root portions which extend into the hub arm of the hub of the propeller system and which are secured to and rotatable relative to the hub arm via a retention assembly. Typically the retention assembly includes one or a plurality of ball bearing assemblies which permit the rotation of the blade in the hub arm for accomplishing pitch change of the blade for altering the speed of the propeller and accordingly, the aircraft.

The blades are typically formed by surrounding a foam spar core with a resin impregnated fabric. Leading and trailing edges of the blade are then formed over the fabric and surrounded by, for example, a Kevlar^{®} sock. Such blades are light and effective for their intended purposes.

### BRIEF DESCRIPTION OF THE INVENTION

According to one embodiment, a propeller blade includes a foam core, an adhesive layer formed on the core and a structural layer that covers at least a portion of the adhesive layer and that surrounds at least a portion of the foam core. The foam core is formed of a compliant material.

According to another embodiment, a method of forming a propeller blade includes: forming a foam core formed of a compliant material; coating at least a portion of the form core with an adhesive layer; and disposing a structural layer over at least a portion of the foam core such that it covers at least a portion of the adhesive layer.

### BRIEF DESCRIPTION OF THE DRAWINGS

The subject matter which is regarded as the invention is particularly pointed out and distinctly claimed in the claims at the conclusion of the specification. The foregoing and other features, and advantages of the invention are apparent from the following detailed description taken in conjunction with the accompanying drawings in which:
FIG. 1 is a plan-view of a prior art propeller blade;
FIG. 2 is a cross-section of the propeller blade shown in FIG. 1; and
FIG. 3 is cross-section of a propeller blade according to one embodiment of the present invention.

### DETAILED DESCRIPTION OF THE INVENTION

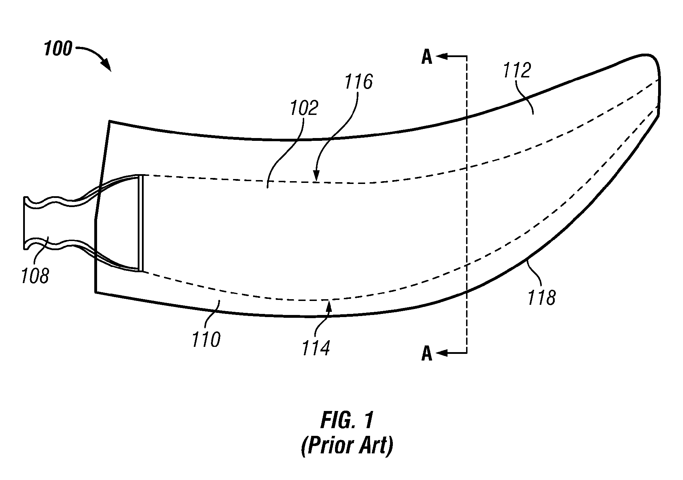

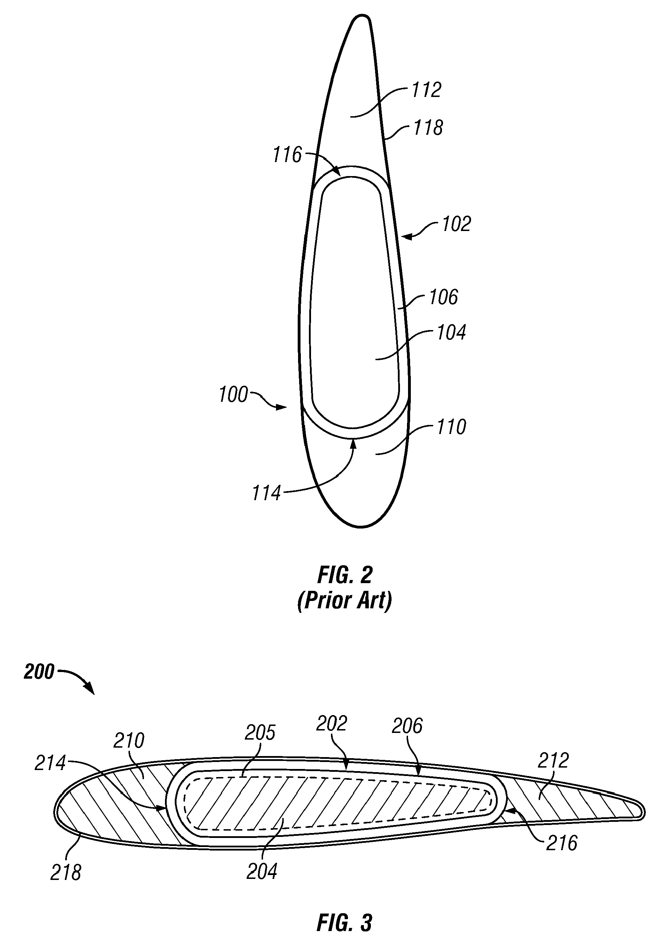

Referring now to FIG. 1, a plan view of a conventional propeller blade 100 is illustrated and will be used to define certain terms, explain how a propeller blade is generally made, and to illustrate the differences between embodiments of the present invention and the prior art. Reference will also be made to FIG. 2, which is a cross-section of the propeller blade 100 of FIG. 1 taken along line A-A, for these purposes.

The blade 100 is formed by first forming a spar 102. The spar 102 includes a spar foam core 104 surrounded by a structural layer 106. The core 104 is typically formed of a foam material that is injected into a mold. The mold can include a layer of fiberglass on the walls thereof that to which the foam of the core 104 adheres. As such, the core 104 can be surrounded by a layer of fiberglass (not shown).

The structural layer 106 is typically formed of a fabric material (e.g. braided carbon) and disposed such that it surrounds the core 104 (and the fiberglass layer if it is included). A spar resin may be then provided and, the spar 102 is heated to set the resin. Considerable thermal stresses can occur in the core 104 as the spar 102 is cooled due to the differences in the coefficients of thermal expansion (CTE) of the core 104 and the structural layer 106.

In some instances, the spar 102 is formed such that a portion of it is surrounded by a root portion 108 that allows the blade 100 to be connected to a hub (not shown). Rotation of the hub causes the blade 100 to rotate and, consequently, causes the generation of thrust to propel an aircraft. In the following discussion, it shall be assumed that the blade 100 rotates in the clockwise direction. The root portion 108 is sometimes referred to as a "tulip" in the industry and is typically formed of a metal.

After the spar 102 is formed, leading edge foam 110 and trailing edge foam 112 are formed on the leading and trailing edges 114, 116, respectively of the spar 102. The leading edge foam 110, trailing edge foam 112 and the spar 102 can then be encased in an outer layer 118. The outer layer 118 can be formed of Kevlar^{®} and be in the form of a sock that is pulled over the assembly that includes the leading edge foam 110, trailing edge foam 112 and the spar 102. Of course, the outer layer 118 could be formed in other manners as well.

As described above, considerable thermal stresses can occur in the core 104 as the spar 102 is cooled due to the differences in the coefficients of thermal expansion (CTE) of the core 104 and the structural layer 106. These stresses can lead to the cracking of the core 104. In addition, thermal stresses can be created between the core 104 and the structural layer 106 due to the wide range of temperatures experienced by the propeller blade 100 in normal operation.

FIG. 3 illustrates a cut-away side view of a propeller blade 200 according to one embodiment of the present invention. The blade 200 is formed by first forming a spar 202. The spar 202 includes a spar foam core 204. In one embodiment, the core 204 is complaint foam material.

A "compliant foam" as the term is used herein, shall refer to a foam that has a high ductility or strain at failure in both shear and tension. Such a foam may be able to handle the considerable thermal stresses that can occur in the core 104 as the spar 102 is cooled due to the differences in the coefficients of thermal expansion (CTE) of the core 104 and the structural layer 106 without cracking. In one embodiment, the foam material is formed of polyuria and polyvinyl chloride (pvc). The foam stress-strain response shows ductile behavior, as opposed to brittle or strickly linear-elastic behavior. The foam is also compatible with prepreg lamination and has a moderate density. The foam has more resistance to cracking, defined as toughness, because of the high ductility, and offers a better replacement core than honeycomb or other competing foam materials, because of its inherent properties.

In one embodiment, the foam material is machined or premolded and can optionally be surrounded by a layer of fiberglass or carbon (not shown) in the same manner as described above.

According to this embodiment, an optional adhesive layer 205 is disposed between foam and fiberglass or foam formed on the outside of the core 204. The adhesive may be any type of adhesive and in one embodiment is formed of an elastomeric or other high strain rate adhesive material. Examples of suitable adhesives include polyurethane adhesive and polysulfide adhesive. In an alternative embodiment, the adhesive layer is an epoxy resin.

A structural layer 206 can then be formed around the adhesive layer 205. In one embodiment, the structural layer 206 is formed of a fiber material, such as a braided carbon sheet, and disposed such that it surrounds the core 204 (and the fiberglass layer if present). In some cases, the spar 202 is heated to set the resin added to the structural layer 206 as described above. In contrast to the prior art, due to the inclusion of the compliant foam, the thermal stresses that can occur in the core 204 as the spar 202 is cooled can be reduced. Such a reduction in thermal stresses can prevent or reduce cracking of the core 204.

While not illustrated in FIG. 3, the spar 202 can be formed such that a portion of it is surrounded by a root portion that allows the blade 200 to be connected to a hub (not shown). Rotation of the hub causes the blade 200 to rotate and, consequently, causes the generation of thrust to propel an aircraft.

After the spar 202 is formed, leading edge foam 210 and trailing edge foam 212 are formed on the leading and trailing edges 214, 216, respectively of the spar 202. The leading edge foam 210, trailing edge foam 212 and the spar 202 can then be encased in an outer layer 218. The outer layer 218 can be formed of Kevlar^{®} and in the form of a sock that is pulled over the assembly that includes the leading edge foam 210, trailing edge foam 212 and the spar 202. Of course, the outer layer 218 could be formed in other manners as well.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A propeller blade (200) comprising:
a compliant foam core (204) formed of a combination of polyuria and polyvinyl chloride (pvc);
an adhesive layer (205) formed on the core (204); and
a structural layer (206) that covers at least a portion of the adhesive layer (205) and that surrounds at least a portion of the foam core (204).

2. The propeller blade of claim 1, further comprising:
a layer of fiberglass at least partially disposed about the adhesive layer (205).

3. The propeller blade of claim 1 or 2, further comprising:
a root disposed within the structural layer (206) at an end of the propeller blade (200).

4. The propeller blade of claim 3, wherein the root surrounds a portion of the foam core (204).

5. The propeller blade of any preceding claim, wherein the adhesive layer (205) is formed of an elastomeric material.

6. The propeller blade of any preceding claim, wherein the structural layer (206) is formed of a fiber material.

7. The propeller blade of any preceding claim, wherein the structural layer (206) is formed of a braided carbon fiber sheet.

8. A method of forming a propeller blade (200) comprising:
forming a foam core (204) from a foam composed of a combination of polyuria and polyvinyl chloride (pvc);
coating at least a portion of the form core (204) with an adhesive layer (205); and
disposing a structural layer (206) over at least a portion of the foam core (204) such that it covers at least a portion of the adhesive layer (205).

9. The method of claim 8, wherein forming a foam core (204) includes injecting a foam into a form having a fiberglass layer disposed therein.

10. The method of claim 8 or 9, further comprising:
coupling a root to the foam core (204);
wherein disposing includes disposing the structural layer (206) over at least a portion of the root.

11. The method of claim 8, 9 or 10, wherein the adhesive layer (205) is formed of an elastomeric material.

12. The method of any of claims 8 to 11, wherein the structural layer (206) is formed of a fiber material.

13. The method of any of claims 8 to 12, wherein the structural layer (206) is formed of a braided carbon fiber sheet.
